(19)

Europäisches Patentamt

European Patent Office

Office européen des brevets

(11) **EP 4 524 599 A1**

(12) **EUROPEAN PATENT APPLICATION**

(43) Date of publication:
**19.03.2025 Bulletin 2025/12**

(21) Application number: **24194601.1**

(22) Date of filing: **14.08.2024**

(51) International Patent Classification (IPC):
**G01S 5/02** (2010.01)     **H04W 4/33** (2018.01)
**G06N 20/00** (2019.01)

(52) Cooperative Patent Classification (CPC):
**G01S 5/0278; G01S 5/02521; G01S 5/0268;
H04W 4/33;** G01S 5/0244; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 IN 202321061954**

(71) Applicant: **Tata Consultancy Services Limited
Maharashtra (IN)**

(72) Inventors:
• **BHAUMIK, SUMITRO
700091 Kolkata, West Bengal (IN)**
• **RATH, HEMANT KUMAR
751024 Bhubaneswar, Odisha (IN)**
• **MENON, MURALIDHARAN SADANAND
600042 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **ESTIMATION OF ACTUAL LOCATION OF USER DEVICE USING AGGREGATION OF LOCATION ESTIMATION MODELS**

(57)     Indoor localization, which estimates the location of a wireless device using Wi-Fi/Zigbee/Bluetooth, is increasingly important for Industry 4.0 applications, such as tracking of robots and large-scale inventory management. Existing approaches have certain practical issues related to enterprise hardware as specific data required by them is not always available due to security and other reasons. Present disclosure provides system and method that implement indoor Location Aggregator Model, which combines multiple estimation location models to provide localization to wireless/user devices while being compliant to enterprise environments. More specifically, channel state information is used for estimating position and identification of candidate sub-region within a region. Further, at least one Location Estimation Model is identified based on the identified candidate sub-region by all LEMS and an accuracy map. The identified LEM is then used for determining an actual location of a user device.

FIG. 4

**EP 4 524 599 A1**

**Description**

CROSS-REFERENCE TO RELATED APPLICATIONS AND PRIORITY

The present application claims priority to Indian application no. 202321061954, filed on September 14, 2023.

TECHNICAL FIELD

The disclosure herein generally relates to location estimation techniques, and, more particularly, to estimation of actual location of user device using aggregation of location estimation models.

BACKGROUND

Indoor location estimation problem is a well-studied problem which has become increasingly relevant over the years. The problem at its core is that there is an indoor environment inside which there could be a person or robot which uses a wireless device. The location of the person needs to be estimated without using outdoor location estimation technologies, such as the Global Positioning System (GPS) since they provide accuracy only during an outdoor setting, while still ensuring security and privacy.

There have been several models which deal with the same problem but with different environmental or system restrictions. Some models allow for collection of low-level physical layer data, while others use advanced techniques such as beamforming or consider multipath signals. While these methods allow for accurate indoor location estimation, they might not work in an enterprise setting because of system restrictions due to security, or system capabilities. Thus, an indoor location estimation model is needed which can still work with a set of restrictions and still provide a reasonable level of accuracy.

SUMMARY

Embodiments of the present disclosure present technological improvements as solutions to one or more of the above-mentioned technical problems recognized by the inventors in conventional systems.

For example, in one aspect, there is provided a processor implemented method for estimation of actual location of user device using aggregation of location estimation models. The method comprises receiving, via one or more hardware processors, Channel State Information (CSI) from a plurality of access points inside a region, wherein the CSI pertains to one or more mobile devices; transmitting, via the one or more hardware processors, the CSI to a plurality of Location Estimation Models (LEMs); obtaining, via the one or more hardware processors, a position estimate computed by each of the plurality of Location Estimation Models (LEMs) based on the CSI from the plurality of access points; identifying, via the one or more hardware processors, a candidate sub-region of the one or more user devices by each of the plurality of Location Estimation Models (LEMs) based on the position estimate to obtain a plurality of candidate sub-regions; identifying at least one LEM amongst the plurality of LEMs based on the candidate sub-region and an accuracy map; and determining an actual location of the one or more user devices based on the identified at least one LEM.

In an embodiment, the accuracy map is obtained by receiving an input data comprising a plurality of CSI measurements from a plurality of positions associated with the region, wherein the plurality of CSI measurements from the plurality of positions are received with respect to a plurality of actual position coordinates; and training the plurality of Location Estimation Models (LEMs) using the input data and the plurality of actual position coordinates.

In an embodiment, during the training the plurality of Location Estimation Models (LEMs), the region is partitioned into a plurality of sub-regions, wherein each sub-region from the plurality of sub-regions has one or more specific signal properties, and wherein the accuracy map is created, the accuracy map comprising a mapping of each sub-region from the plurality of sub-regions to a specific accurate LEM.

In an embodiment, the step of identifying at least one LEM amongst the plurality of LEMs is further based on number of LEMs identifying the candidate sub-region or a probable sub-region that is in proximity of the candidate sub-region.

In an embodiment, the method further comprises communicating, a probable change in one or more sub-regions, to a network administrator for collecting a set of CSI measurements based on the number of LEMs identifying the candidate sub-region or the probable sub-region that is in proximity of the candidate sub-region.

In an embodiment, the one or more specific signal properties are associated with each sub-region based on one or more obstacles present therein.

In another aspect, there is provided a processor implemented system for estimation of actual location of user device using aggregation of location estimation models. The system comprises: a memory storing instructions; one or more communication interfaces; and one or more hardware processors coupled to the memory via the one or more communication interfaces, wherein the one or more hardware processors are configured by the instructions to: receive Channel State Information (CSI) from a plurality of access points inside a region, wherein the CSI pertains to one or more mobile devices; transmit the CSI to a plurality of Location Estimation Models (LEMs); obtain a position estimate computed by each of the plurality of Location Estimation Models (LEMs) based on the CSI from the plurality of access points; identify a candidate sub-region of the one or more user devices by each of the plurality of Location Estimation Models (LEMs) based on the position estimate to obtain a plurality of candidate sub-regions; identify at least one LEM amongst the plurality of LEMs based on the candidate sub-region and an accuracy map; and determining an actual location of the one or more user devices based on the identified at least one LEM.

In an embodiment, the accuracy map is obtained by receiving an input data comprising a plurality of CSI measurements from a plurality of positions associated with the region, wherein the plurality of CSI measurements from the plurality of positions are received with respect to a plurality of actual position coordinates; and training the plurality of Location Estimation Models (LEMs) using the input data and the plurality of actual position coordinates.

In an embodiment, during the training the plurality of Location Estimation Models (LEMs), the region is partitioned into a plurality of sub-regions, wherein each sub-region from the plurality of sub-regions has one or more specific signal properties, and wherein the accuracy map is created, the accuracy map comprising a mapping of each sub-region from the plurality of sub-regions to a specific accurate LEM.

In an embodiment, the step of identifying at least one LEM amongst the plurality of LEMs is further based on number of LEMs identifying the candidate sub-region or a probable sub-region that is in proximity of the candidate sub-region.

In an embodiment, the one or more hardware processors are further configured by the instructions to communicate, a probable change in one or more sub-regions, to a network administrator for collecting a set of CSI measurements based on the number of LEMs identifying the candidate sub-region or the probable sub-region that is in proximity of the candidate sub-region.

In an embodiment, the one or more specific signal properties are associated with each sub-region based on one or more obstacles present therein.

In yet another aspect, there are provided one or more non-transitory machine-readable information storage mediums comprising one or more instructions which when executed by one or more hardware processors cause estimation of actual location of user device using aggregation of location estimation models by receiving Channel State Information (CSI) from a plurality of access points inside a region, wherein the CSI pertains to one or more mobile devices; transmitting the CSI to a plurality of Location Estimation Models (LEMs); obtaining a position estimate computed by each of the plurality of Location Estimation Models (LEMs) based on the CSI from the plurality of access points; identifying a candidate sub-region of the one or more user devices by each of the plurality of Location Estimation Models (LEMs) based on the position estimate to obtain a plurality of candidate sub-regions; identifying at least one LEM amongst the plurality of LEMs based on the candidate sub-region and an accuracy map; and determining an actual location of the one or more user devices based on the identified at least one LEM.

In an embodiment, the accuracy map is obtained by receiving an input data comprising a plurality of CSI measurements from a plurality of positions associated with the region, wherein the plurality of CSI measurements from the plurality of positions are received with respect to a plurality of actual position coordinates; and training the plurality of Location Estimation Models (LEMs) using the input data and the plurality of actual position coordinates.

In an embodiment, during the training the plurality of Location Estimation Models (LEMs), the region is partitioned into a plurality of sub-regions, wherein each sub-region from the plurality of sub-regions has one or more specific signal properties, and wherein the accuracy map is created, the accuracy map comprising a mapping of each sub-region from the plurality of sub-regions to a specific accurate LEM.

In an embodiment, the step of identifying at least one LEM amongst the plurality of LEMs is further based on number of LEMs identifying the candidate sub-region or a probable sub-region that is in proximity of the candidate sub-region.

In an embodiment, the one or more instructions which when executed by one or more hardware processors further cause communicating, a probable change in one or more sub-regions, to a network administrator for collecting a set of CSI measurements based on the number of LEMs identifying the candidate sub-region or the probable sub-region that is in proximity of the candidate sub-region.

In an embodiment, the one or more specific signal properties are associated with each sub-region based on one or more obstacles present therein.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for estimation of actual location of user device using aggregation of location estimation models (LEMs), in accordance with an embodiment of the present disclosure.

FIG. 2 depicts an overview of the system illustrating a pre-deployment and a post-deployment phase/stage for estimation of actual location of user device using aggregation of location estimation models (LEMs), in accordance with an embodiment of the present disclosure.

FIG. 3 depicts an exemplary high level block diagram of the system for estimation of actual location of user device using aggregation of location estimation models (LEMs), in accordance with an embodiment of the present disclosure.

FIG. 4 depicts an exemplary flow chart illustrating a method for estimation of actual location of user device using aggregation of location estimation models (LEMs), using the systems of FIG. 1-3, in accordance with an embodiment of the present disclosure.

FIG. 5 depicts environment region $\mathbb{R}$ with sub-regions of different class, in accordance with an embodiment of the present disclosure.

FIG. 6A depicts two random walks by a site surveyor in a region $\mathbb{R}$, in accordance with an embodiment of the present disclosure.

FIG. 6B depicts sampled positions during a walk have high accuracy for a particular LEM, in accordance with an embodiment of the present disclosure.

FIG. 6C depicts conversion of $\mathbb{R}$ to discrete cells and tagging them to a LEM as per sampling, in accordance with an embodiment of the present disclosure.

FIG. 7A through 7D depict Mean Absolute Error (MAE) of the system 100 over different sub-region sizes and with different environmental conditions, in accordance with an embodiment of the present disclosure.

FIG. 8 depicts a graphical representation illustrating Mean Absolute Error for a single device for the system compared to other LEMs, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The indoor location estimation problem is a well-studied problem which has become increasingly relevant over the years. The problem at its core is that there is an indoor environment inside where there could be a person or robot which uses a wireless device. The person with the wireless device can move around freely inside the environment. There are also Access Points (APs) scattered throughout the environment which passively collect Channel State Information (CSI) from the wireless device. Using the CSI data, the location of the person or object inside the reference frame of the indoor environment needs to be determined in real time. The location needs to be estimated without using outdoor location estimation technologies, such as the Global Positioning System (GPS) since they provide accuracy only during an outdoor setting, while still ensuring security and privacy.

There have been several models which deal with the same problem but with different environmental or system restrictions. Some models allow for collection of low-level physical layer data, while others use advanced techniques such as beamforming or consider multipath signals. While these methods allow for accurate indoor location estimation, they might not work in an enterprise setting because of system restrictions due to security, or system capabilities. Thus, an indoor location estimation model is needed which can still work with a set of restrictions and still provide a reasonable level of accuracy.

These objectives need to be fulfilled while being platform agnostic as this model needs to work on a wide variety of vendor hardware and we need to respect each platform's capabilities. There is a large collection of work regarding indoor location estimation. However, it is observed that there is a variation regarding performance of models depending on the type of environment, even if they return similar levels of accuracy. Some models perform better when the user is away from walls, and others perform better when there are less obstacles. This observation begs the question; can multiple working models be combined to arrive at the most optimum model based on the environment? This would allow us to get the best result out of a pool of location estimation models.

Embodiment of the present disclosure implement systems and methods for estimation of actual location of user device using aggregation of location estimation models which solve the above-mentioned drawbacks in the existing works. More specifically, a multi-model localization aggregator is implemented which provides a better location estimate than the individual location estimator models. The aggregator model automatically identifies changes that can occur in the environment and reports back to the network administrator for correction. The model runs on top of enterprise hardware without requiring special privileges or low-level network data while being completely vendor-agnostic.

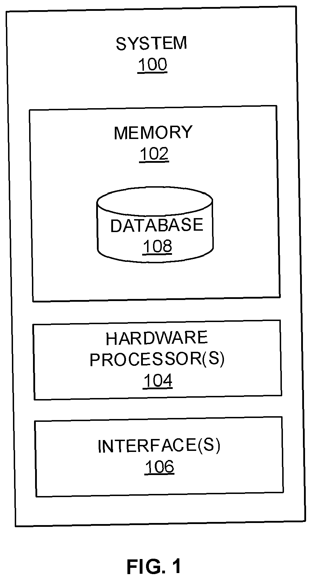

Referring now to the drawings, and more particularly to FIGS. 1 through 8, where similar reference characters denote corresponding features consistently throughout the figures, there are shown preferred embodiments and these embodiments are described in the context of the following exemplary system and/or method.

FIG. 1 depicts an exemplary system 100 for estimation of actual location of user device using aggregation of location estimation models, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more indoor environments and/or regions. The database 108 further comprises information pertaining to a plurality of access points, one or more mobile devices inside the region, channel state information pertaining to the mobile devices, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

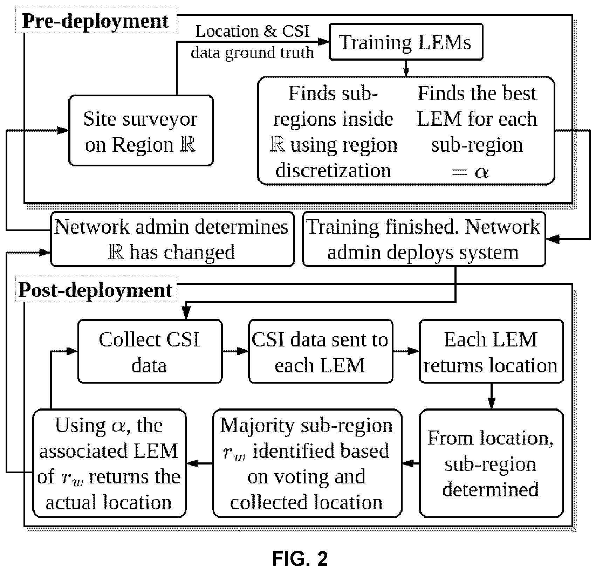

FIG. 2, with reference to FIG. 1, depicts an overview of the system 100 of FIG. 1 illustrating a pre-deployment and a post-deployment phase/stage for estimation of actual location of user device using aggregation of location estimation models, in accordance with an embodiment of the present disclosure.

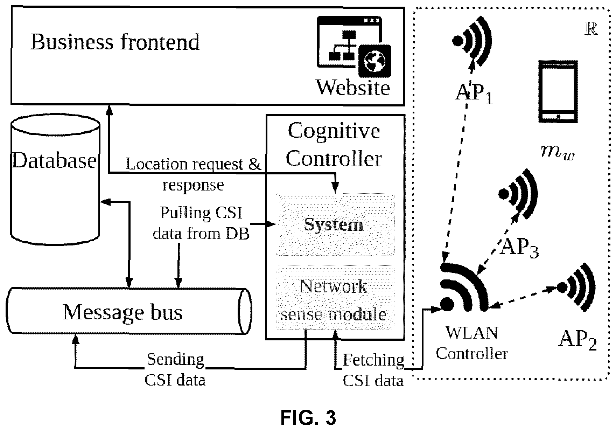

FIG. 3, with reference to FIGS. 1-2, depicts an exemplary high level block diagram of the system 100 of FIG. 1 for estimation of actual location of user device using aggregation of location estimation models (LEMs), in accordance with an embodiment of the present disclosure.

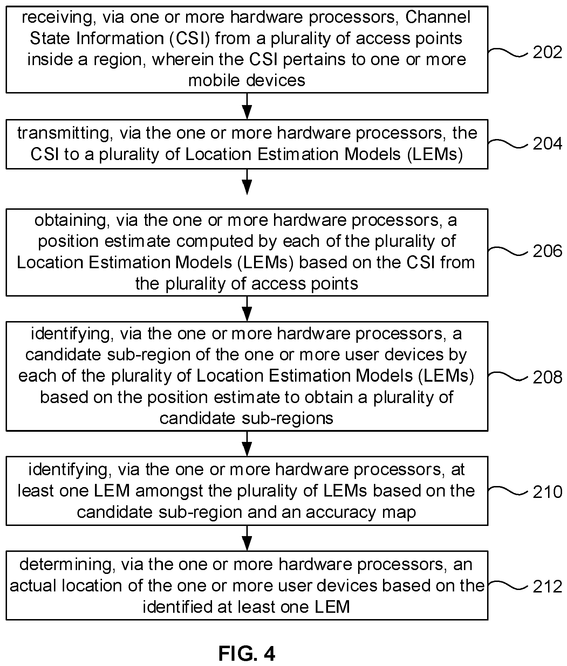

FIG. 4, with reference to FIGS. 1 through 3, depicts an exemplary flow chart illustrating a method for estimation of actual location of user device using aggregation of location estimation models (LEMs), using the systems 100 of FIG. 1-3, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIGS. 1-3, and the flow diagram as depicted in FIG. 4. Although steps of the method of FIG. 4 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method of the present disclosure, the one or more hardware processors 104 receive Channel State Information (CSI) from a plurality of access points inside a region. The CSI pertains to one or more mobile devices that either are navigating inside the region or intend to traverse through the region. The expression 'mobile device' may also be referred to as 'mobile communication device', 'mobile agent', 'wireless device', 'mobile phone', and the like, and may be interchangeably used herein. Let there be a geographical region $\mathbb{R}$ (also referred as the region of described in step 202), which is two-dimensional in nature. In the physical sense, $\mathbb{R}$ can be any type of enterprise environment, such as an office space, a large warehouse, factory floor, etc. Inside $\mathbb{R}$, there are users who carry wireless mobile devices, such as mobile phones, tablets, or laptops, collectively termed as mobile agents $m_w$. There are also stationary wireless Access Points (APs) to which the mobile agents are connected and periodically exchange Channel State Information (CSI). It is assumed by the system and method of the present disclosure that all $m_w$ use the same Medium Access Control ID (MAC ID) throughout their stay in the environment/region $\mathbb{R}$ and thus they can be uniquely identified.

At step 204 of the method of the present disclosure, the one or more hardware processors 104 transmit the CSI to a plurality of Location Estimation Models (LEMs). Prior to performing the step 202, the LEMs and the system 100 are trained. The steps 204 and training LEMs and the system 100 are better understood by way of following description:

A site surveyor collects CSI from all over $\mathbb{R}$ for the purpose of training various Location Estimation Models (LEMs). These LEMs are established models from the existing literature which give a location estimate which vary slightly compared to the ground-truth. During training, $\mathbb{R}$ is partitioned into multiple "sub-regions" and the system 100 determines which LEM is most accurate in which sub-region, and this mapping is saved in an accuracy map $\alpha$. In other words, an input data comprising a plurality of CSI measurements is received from a plurality of positions associated with the region $\mathbb{R}$. The plurality of CSI measurements from the plurality of positions are received with respect to a plurality of actual position coordinates. Using the above input data along with the plurality of actual position coordinates, the Location Estimation Models (LEMs) are trained. During the training the plurality of Location Estimation Models (LEMs), the region $\mathbb{R}$ is partitioned into a plurality of sub-regions. Each sub-region from the plurality of sub-regions has one or more specific signal properties. The one or more specific signal properties are associated with each sub-region based on one or more obstacles present therein. The expression 'signal properties' refer to metrics which can be collected from an access point (AP) regarding the environment or the mobile devices. The availability of these metrics greatly depends on the hardware capability of the AP and the security protocols of a given network. In most enterprise networks, the most common form of signal property available is Received Signal Strength Indicator (RSSI), which is the power at which the AP is receiving a signal from a mobile device. RSSI primarily depends on distance between the AP and the mobile device and the nature of obstacles (e.g., a wall, or any object, and the like) between them. While there are alternate signal properties, such as time-of-arrival, angle-of-arrival, etc., obtaining them is not possible or may be challenging due to security policies enforced by the network administrator or due to hardware restrictions.

Referring to step 204, the accuracy map $\alpha$ is created, wherein the accuracy map comprises a mapping of each sub-region from the plurality of sub-regions to a specific accurate LEM. This ensures that most accurate LEM is tagged/mapped to specific sub-regions. Once the training phase is completed, the system 100 can be deployed.

At step 206 of the method of the present disclosure, the one or more hardware processors 104 obtain a position estimate computed by each of the plurality of Location Estimation Models (LEMs) based on the CSI obtained from the plurality of access points.

While existing literature provide various techniques for estimating the position of a mobile device, method of the present disclosure employed by the LEMs for position estimation can be broadly classified into two types: by using machine learning and by using trilateration. In the machine learning method, a large number of data points are collected during the training phase which includes RSSI values from all the APs $R_1 = (r_1, r_2, r_3, r_4,..., r_n)$ and the mobile devices actual position $P_1(x_1, y_1)$. This data is used to train a machine learning model, such as random forests, and the like. During deployment, data is again collected from the APs ($R_2, R_3,...,$ and so on) and the collected and passed through the machine learning model. The machine learning model tries to estimate what is the most likely position ($P_2, P_3$) for the given position by comparing it against the collected data.

In trilateration approach, which is a very popular location estimation technique, the position is simply calculated by the concept of intersection of signals. If a mobile device is reachable by three or more APs, its position can be or is determined by solving a set of 3 equation of circles, provided the position of the APs is known, which is usually known, and the distance between the AP and mobile device. This method, however, greatly depends on a path-loss model as known in the art. A path-loss model simulates how a signal degrades over distance, the presence of obstacles, interference due to other devices. Selecting an accurate path-loss model is critical for good location estimation accuracy. However, this method is very fast since it involves no training, and the position estimation can be done in real-time.

The system 100 continuously collects CSI data from the APs, and each LEM computes the location (also referred as position estimate, or location estimate, and interchangeably used herein) of $m_w$. For each location estimate by a LEM, the system 100 determines the sub-region (e.g., identification of candidate sub-region), and by using a majority voting scheme the system 100 finds out in which sub-region ($r_w$) the mobile agent $m_w$ is actually residing. The system 100 then simply uses the LEM associated with $r_w$ by referring $\alpha$, which is precomputed, and return the location estimate. If the network administrator finds out the location estimates are not accurate, the deployment is paused, and $\mathbb{R}$ is surveyed again.

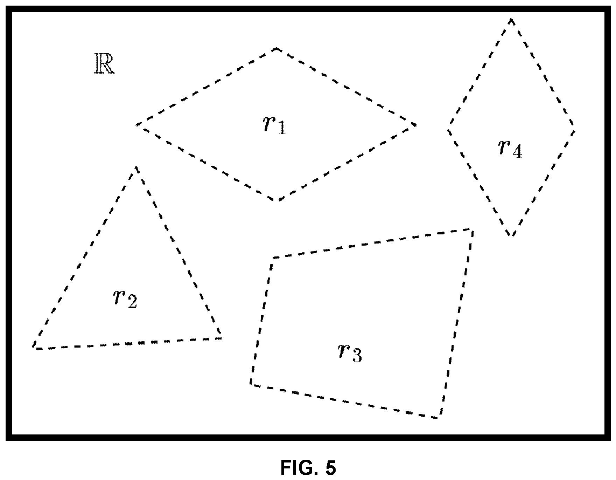

The system 100 considers that the entire environment/region $\mathbb{R}$ is made up of multiple "sub-regions", denoted as $r_1, r_2,..., r_l$. Every subregion can be clustered into $j$ different sub-region classes, where classes are denoted as $C_1, C_2,..., C_j$. These sub-region classes are different from each other from the perspective of CSI when viewed by a mobile agent. For example, one class might have more obstacles than another, another might have more interference and so on (FIG. 5).

More specifically, FIG. 5, with reference to FIGS. 1 through 4, depicts environment region $\mathbb{R}$ with sub-regions of different class, in accordance with an embodiment of the present disclosure. The sub-region's shape is determined by the way obstacles are arranged inside them. The system 100 also has a collection of Location Estimation Models (LEMs) $\mathbb{L}_1, \mathbb{L}_2, \ldots, \mathbb{L}_k$ where each model gives different accuracy for different classes.

In the experiments conducted by the system and method of the present disclosure, the number of LEMs is set as $k$ = 3 and the number of classes to $j$= 3 but with a high number of sub-regions, i.e., $l \gg j$, to simulate a varied region. The three models used in the system are indoor localization using random forests abbreviated as LEM 1, localization using hybrid signal fingerprints abbreviated as LEM 2, and trilateration-based indoor localization for enterprise networks abbreviated as LEM 3. The reason for selecting such varied LEMs is because different LEMs make different assumptions about the environment, and thus $\mathbb{L}_p$ might give a higher accuracy in $C_x$ while performing poorly in $C_y$ since $C_x$ and $C_y$ have different physical characteristics. When a wireless device is moving through each sub-region, every LEM computes the location based on the received CSI. Thus, the system computes the matrix $\alpha_{m,n}$ where $\alpha$ is the accuracy map at sub-region m for LEM n. Once $\alpha_{m,n}$ has been computed for all sub-regions and LEMs, the system 100 can switch between different LEMs or give a weighted estimation of the location. However, there are several sub-challenges:

1) How to decide which LEMs are suitable for the system?
2) How to determine each sub-region boundary?
3) Once the sub-regions are established, how do to determine the location of mw?
4) What if the sub-region properties change after deployment?

There are three conditions which a LEM must satisfy for it to be included in the system 100.

1. Is the model's input set satisfied by the network platform's output?
2. Is the model's average accuracy similar to the already existing models inside the system?
3. Does the model provide "specialized accuracy" over the existing models inside the system, i.e., is the model accurate in certain scenarios where the other models are not?

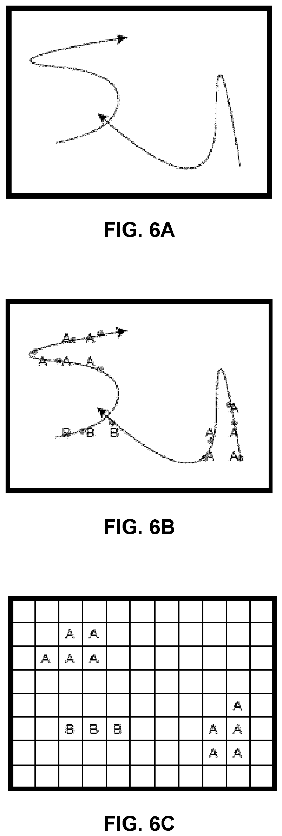

Condition 1 is required because many LEMs in the existing literature need sources of data which might not be provided by enterprise hardware (e.g., Angle-of-Arrival, Phase-of-Arrival), and thus, the LEMs will fail to run. Condition 2 is essential because the model of the present disclosure uses a voting strategy to determine the rough location, which is discussed later. If some LEMs are less accurate than others, there will not be an agreement during the voting phase which can reduce the accuracy of the system. Finally, Condition 3 is required to increase accuracy in certain subregions. The system's core idea is to utilize the strength of different LEMs so as to improve the overall accuracy. If a certain LEM $\mathbb{L}_h$ gives higher accuracy over a certain class $C_z$ where other LEMs give lower accuracy, it indicates $\mathbb{L}_h$ is specialized for class $C_z$. Without $\mathbb{L}_h$, it's possible that existing LEMs could confuse class $C_z$ with another class $C_y$. However, verifying whether a LEM is satisfying the above three conditions can only be determined by running them over the region $\mathbb{R}$. $\mathbb{R}$ is made up of or partitioned into multiple sub-regions, however, the boundaries and number of sub-regions is not known beforehand. This can be achieved by employing $W$ number of random walks with a fixed sampling rate s in region $\mathbb{R}$ (FIG. 6A). FIG. 6A, with reference to FIGS. 1 through 5, depicts two random walks by a site surveyor in a region $\mathbb{R}$, in accordance with an embodiment of the present disclosure. These random walks are performed by site surveys where a surveyor, or a robot, traverses the environment to determine signal strength at various places. During a random walk, the output from the various LEMs is compared to the ground truth. Since a random walk can traverse through multiple subregions, there will be instances when certain LEMs give high accuracy at different sub-regions. Similarly, there can be subregions where multiple LEMs give accuracies close to each other. Utilizing these instances of high accuracy during the random walks is the key idea of TLAM. With a sufficient number of random walks, the entire region should be traversed (FIG. 6B). FIG. 6B, with reference to FIGS. 1 through 6A, depicts sampled positions during a walk have high accuracy for a particular LEM, in accordance with an embodiment of the present disclosure. The exact value of W needs to be determined by the network administrator as it's highly dependent on the size of . In the setup of the present disclosure, the system has set $W$ = 50 for a high coverage.

In order to help the system 100 partition $\mathbb{R}$ into individual sub-regions, a discretization technique is implemented where $\mathbb{R}$ is broken in a $p \times q$ grid, where one unit square of the grid is denoted as a "cell" c. The size of the cells is predetermined; larger the cells, faster the sub-regions can be determined but at the cost of accuracy. Ideally, the dimension of the cells should be related to the sampling rate s and the average velocity $v$ of the surveyor so that most cells are sampled at least once during a walk. If a random walk traverses through cell c and $\mathbb{L}_k$ gives an accuracy greater than a threshold $\beta$), then c is tagged with $\mathbb{L}_k$ (FIG. 6C). FIG. 6C, with reference to FIGS. 1 through 6B, depicts conversion of $\mathbb{R}$ to discrete cells and tagging them to a LEM as per sampling, in accordance with an embodiment of the present disclosure. Due to the nature of random walks, there might be cells which are untagged even after W number of walks. In that case, the system 100 can tag them synthetically by applying a smoothing filter to tag all remaining cells. This is done by using a $f \times f$ mean convolution filter over the entire region, where $f = 3$ for the experimental setup.

At step 208 of the method of the present disclosure, the one or more hardware processors 104 identify a candidate sub-region of the one or more user devices by each of the plurality of Location Estimation Models (LEMs) based on the position estimate to obtain a plurality of candidate sub-regions.

At step 210 of the method of the present disclosure, the one or more hardware processors 104 identify at least one LEM amongst the plurality of LEMs based on the candidate sub-region and an accuracy map.

At step 212 of the method of the present disclosure, the one or more hardware processors 104 determine an actual location of the one or more user devices based on the identified at least one LEM. The steps 208 through 212 are better understood by way of following description.

The system 100 can be used for location estimation since all sub-regions are known. However, before the system 100 is used, a simple problem needs to be solved; how to determine in which sub-region $r_z$ a mobile agent $m_w$ is present? This is required because based on current sub-region $r_z$, the system 100 uses the appropriate LEM to compute the location. This is achieved using a plurality voting mechanisms. In other words, the step of identifying at least one LEM amongst the plurality of LEMs is further based on number of LEMs identifying the candidate sub-region or a probable sub-region that is in proximity of the candidate sub-region (e.g., proximity of the probable sub-region may refer to a sub-region how close of far it is from the candidate sub-region). It is reasonable to assume that if the CSI data is passed to each LEM, there can be a general agreement regarding at which sub-region $m_w$ is currently present at, if not the exact position. Thus, $r_z$ is determined by taking a vote between all the LEMs as per equation (1).

$$r_z = mode(\mathbb{L}_1(m_w), \mathbb{L}_2(m_w), \mathbb{L}_3(m_w), \dots, \mathbb{L}_k(m_w)) \qquad (1)$$

The function $\mathbb{L}(m_w)$ returns the sub-region ID based on the CSI data returned by $m_w$. Once $r_z$ has been determined, the system 100 can find the LEM which provides the highest accuracy for that sub-region by referring to matrix $\alpha_{m,n}$.

Once $\alpha_{m,n}$ has been calculated in the sub-region estimation phase, the system 100 assumes that the sub-regions remain relatively "constant", i.e., sub-regions do not suddenly change locations or new sub-regions do not suddenly appear. However, there can be small changes in the sub-regions near the boundaries due to changes in the environment, such as movement in the obstacles or change in signal interference. So, the system 100 needs to detect that the environment has changed and then inform the network administrator to re-survey the changed areas and update $\alpha$. In other words, a probable change in one or more sub-regions is notified/communicated to a network administrator for collecting a set of CSI measurements based on the number of LEMs identifying the candidate sub-region or the probable sub-region that is in proximity of the candidate sub-region.

The system 100 is very restricted in terms of the variety of data. For example, the system 100 does not have any camera access to observe the change or any access to user feedback. Thus, an approach needs to be implemented by which the changes in the environment can be detected using CSI alone. To address this, the system 100 implemented an effective path-prediction based sub-region boundary change detection model. Say a mobile $m_w$ is currently at cell $c_{a,b}$ where (a, b) are the coordinates of the grid which is inside sub-region $r_x$ and sub-region $r_y$ is adjacent to it. When the boundary of a sub-region changes due to a change in the environment, there can be three different cases.

I. The boundary ahead of $m_w$'s path has changed, i.e., $m_w$ is about to encounter a changed sub-region when moving from sub-region $r_x$ to $r_y$.
II. The boundary behind $m_w$ has changed, i.e., $m_w$ has crossed a sub-region $r_x$ and then $r_x$'s boundary changed.
III. The boundary of a sub-region $r_y$ changed and $m_w$, which was currently in $r_x$, abruptly switched to $r_y$.

It can be trivially stated that Case II cannot be identified with the existing system limitations since $m_w$ was not near the sub-region boundary, and thus, could not acquire any CSI data regarding the change in sub-region boundary. Case I and Case III can be identified by analyzing the path history of $m_w$, described below.

For Case I, if the extrapolated path of $m_w$ from $r_x$ does not match the current path of $m_w$ in $r_y$, then the system 100 can assume that a boundary change has occurred at cell $c_{a,b}$ which is near the boundary of $r_x$ and $r_y$. For Case III, the identification process is similar to Case I with the only difference being that the model will not be able to accurately identify which cells have changed, since mw did not cross a changed subregion boundary.

The system and method of the present disclosure mathematically define a boundary change as follows; the mean absolute difference of the extrapolated forward path coordinates $\mathcal{P}_f$ from sub-region $r_x$ to sub-region $r_y$ and the current path coordinates $\mathcal{P}_c$ is greater than a divergence threshold $d_t$ within a sampling window size of l sample values, as shown in equation (2). The function $\mathcal{P}(t_i)$ returns the extrapolated coordinates of mw at time instant $t_i$ and the operator $\Theta$ computes the distance between a set of coordinates.

$$\frac{\sum_i^l \mathcal{P}_f(t_i) \Theta \mathcal{P}_f(t_i)}{l} > d_t \qquad (2)$$

Once the error has been detected, the system 100 records $c_{a,b}$ which is the cell at which the boundary change was first detected. The system 100 then returns the changed cell coordinates $c_{a,b}$ along with the type of change to the network administrator. The network administrator may then decide to survey the local proximity of $c_{a,b}$.

An important metric for error detection is how quickly the system can detect the error. Ideally, the intent of the system 100 is to detect the error while $m_w$ is in the same sub-region where the boundary has changed. It depends on a few key factors, such as AP sampling rate s which is limited by the hardware, velocity v of mobile agent $m_w$, and the sampling window of l sample values. Thus, for timely error detection it can be noted $\frac{vl}{s} \leq$ average length or width of a sub-region.

Experimental setup:

The system 100 and method of the present disclosure initially tried using existing network simulators (e.g., refer "T. R. Henderson, M. Lacage, G. F. Riley, C. Dowell, and J. Kopena, "Network simulations with the ns-3 simulator," SIGCOMM demonstration, vol. 14, no. 14, p. 527, 2008.") to simulate the system, however, there is no direct way to create subregions with different CSI properties. Therefore, the present disclosure simulated the system 100 as a network simulation using Python 3. In the simulator, the system and method described herein used a wireless signal propagation model with path loss which is modeled after T-IPLM (e.g., refer "H. K. Rath, S. Timmadasari, B. Panigrahi, and A. Simha, "Realistic indoor path loss modeling for regular wifi operations in India," in 2017 Twenty-third National Conference on Communications (NCC). IEEE, 2017, pp. 1-6."), which is a variation of the ITU indoor propagation model (e.g., refer "T. Chrysikos, G. Georgopoulos, and S. Kotsopoulos, "Attenuation over distance for indoor propagation topologies at 2.4 ghz," in 2011 IEEE Symposium on Computers and Communications (ISCC). IEEE, 2011, pp. 329-334.").

Table 1

| Sub-region size | Notation | Average Length (m) | Average Breadth (m) |
|---|---|---|---|
| Small | $\mathbb{R}_1$ | 4.4 | 3.6 |
| Medium | $\mathbb{R}_2$ | 6.8 | 5.5 |
| Large | $\mathbb{R}_3$ | 10.4 | 8.4 |

The present disclosure created an environment/region $\mathbb{R}$ of dimension 20m×20m, which consists of sub-regions of various sizes. Each subregion is unique from a signal propagation point of view, i.e., path-loss varies across sub-regions due to the nature and number of obstacles present in them. In the simulation, the number of classes of sub-region types was set to j = 3. In practical deployments, the system and method had access to detailed floor plans of the environments, so extracting sub-region data from them, while not trivial, should be doable with a site surveyor. The system and method created three environments, { $\mathbb{R}_1, \mathbb{R}_2, \mathbb{R}_3$ }, with different average sub-region sizes (Table 1). This variation simulates office spaces of different types, such as, small cubicles, conference rooms and large halls. Next, a mobile agent $m_w$ was created which traversed through the environment several times (simulation runs = 100), each time with a random movement trajectory. The CSI data of $m_w$ was collected from APs placed in the environment (number of APs = 3). The CSI data was fed into the various LEMs, which are based on existing indoor location models. Their location estimation is fed into the system 100 which estimates the location using a voting mechanism as described herein. The existing models' and the system's estimation of the location is compared against the ground truth, and the present disclosure calculated various metrics based on the actual position of $m_w$.

RESULTS:

**Effect of Sub-region** Size:

The mobile agent $m_w$ was made to traverse through three different types of environments, each environment having subregions of different average dimensions, and these are denoted as $\{\mathbb{R}_1, \mathbb{R}_2, \mathbb{R}_3\}$. It was noticed that as the subregion size was reduced, the Mean Absolute Error (MAE) of the system 100 slightly decreased but not as much the other location estimation models.

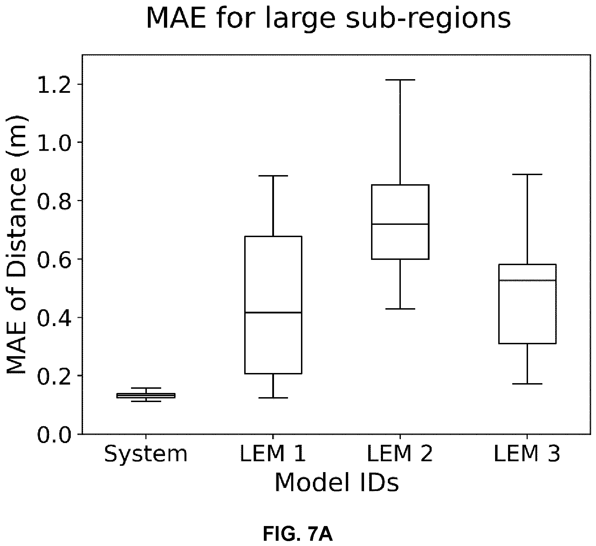

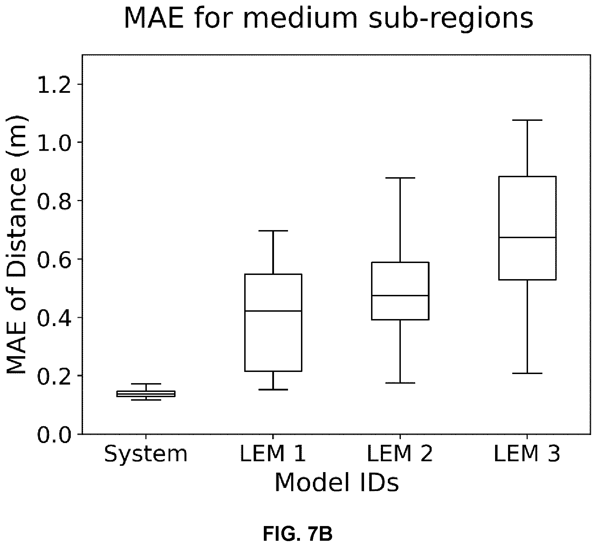

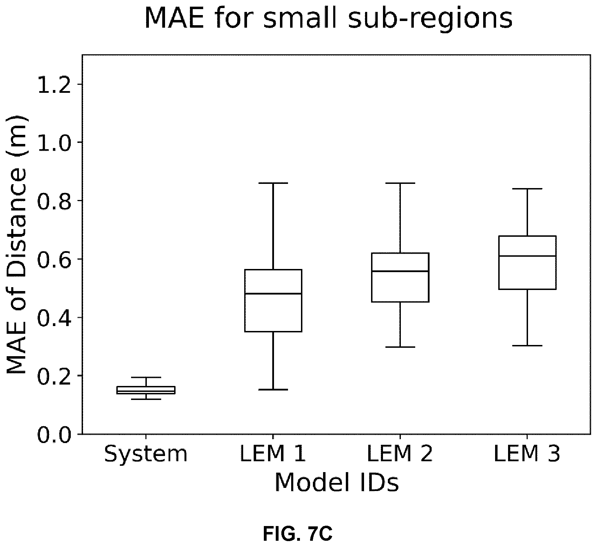

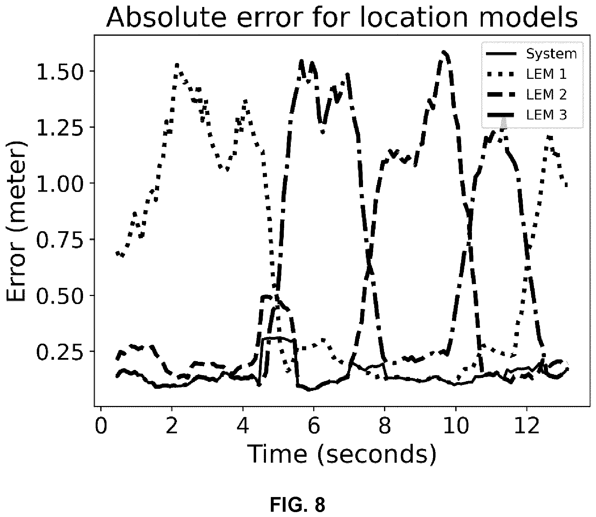

The system's strength is its low error variance across different sub-regions which can be seen in the difference between the upper and lower quartile of the results (FIG. 7A-7D). More specifically, FIG. 7A through 7D, with reference to FIGS. 1 through 6C, depict Mean Absolute Error (MAE) of the system 100 over different sub-region sizes and with different environmental conditions, in accordance with an embodiment of the present disclosure. This indicates that the voting phase is highly accurate. The scenarios where system loses accuracy are during crossing sub-region boundaries. This is expected because of how the voting works. When $m_w$'s path is near a border between $r_x$ and $r_y$ but not yet crossed to $r_y$, a subset of the LEMs report that $m_w$ has already crossed to $r_y$ (FIG. 8 at $t = 5$). FIG. 8, with reference to FIGS. 1 through 7D, depicts a graphical representation illustrating Mean Absolute Error for a single device for the system compared to other LEMs, in accordance with an embodiment of the present disclosure. Such errors occur more frequently for LEMs which are known to have a low accuracy for the current sub-region $r_y$. Thus, it's essential to have LEMs which have an overall similar accuracy to each other.

**Effect** of Excess **Number of LEMs:**

The voting mechanism of system 100 provides greater accuracy over the individual LEMs. Since the present disclosure used the plurality voting scheme to determine sub-regions, the present disclosure assumed that the individual LEMs are accurate. However, if a majority of the LEMs return inaccurate results, the accuracy of system 100 can drastically reduce. Hence, it is essential to use accurate and performant LEMs in the voting phase. It was observed that when the number of LEMs was increased, the accuracy fell sharply. Thus, using too many LEMs can reduce the efficiency of the voting phase if a significant subset of the LEMs is not accurate. The optimal number of LEMs should be equal to the number of sub-regions classes, so that each sub-region class has its most suited LEM, i.e., $1 = j$.

**Effect of Increased Interference in Environment:**

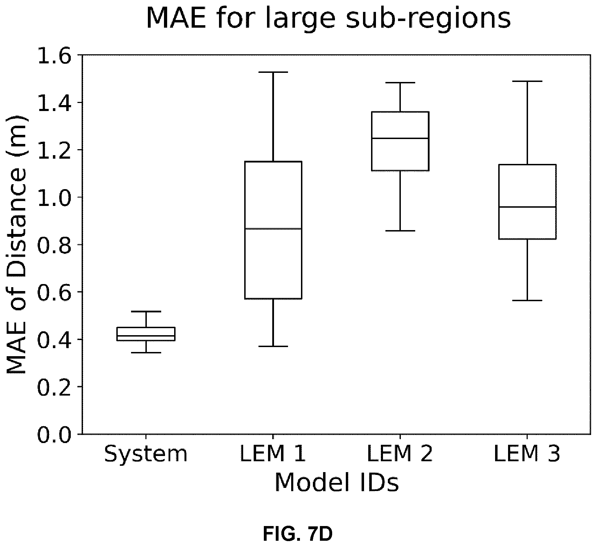

It was also checked on how the system 100 performs when the environment conditions were changed. Example of such changes can be an increase in environment obstacles, increase in number of wireless devices causing interference, etc. These changes affect the AP's ability to collect correct CSI data. It was observed that accuracy is affected more due to environmental changes than changes in sub-region size (FIG. 7D). This is because the LEMs themselves lose accuracy in a noisy environment, which in turn affects the system 100. However, the system 100 still provides much better accuracy over the individual models since the voting phase overcomes the effect of increased interference.

**Sub-region Boundary Change Identification:**

The present disclosure also checked how quickly the system 100 can detect a change in subregion boundaries. The boundary changes were simulated by making $m_w$ traverse between sub-regions while shifting the boundary by a random amount ($\pm 0.10$m). It was observed that with a sampling frequency (s) of 10 Hz and a velocity ($v_m$) of 1ms$^{-1}$ the system 100 could correctly identify the boundary change within a second. However, the system 100 could only correctly identify the boundary changes around 79% of the time. This is because some boundary changes were within the distance threshold $d_t$. The accuracy of the boundary change detection greatly depends on how the system 100 or the network administrator sets the parameters. However, for the given velocity of $m_w$, the mobile device travels a maximum of 1m, which is well within the dimensions of a sub-region, and thus, the system 100 can correctly identify the boundary at which the change took place.

In the present disclosure, the embodiments described herein showcased the system which implemented an indoor GPSfree location estimation methodology using model aggregation which works on top of enterprise networks. While developing the system 100, focus was given to allow it to work with the Cognitive Controller framework which allows it to be vendor-agnostic. The system 100 was tested using a simulator in a variety of scenarios and it has been shown through experiments that the system 100 keeps the mean absolute error within 20 cm. The system 100 strength is its ability to select the right model depending on the environment and thus providing a better accuracy than individual location estimation models.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving, via one or more hardware processors, Channel State Information (CSI) from a plurality of access points inside a region (202), wherein the CSI pertains to one or more mobile devices;
   transmitting, via the one or more hardware processors, the CSI to a plurality of Location Estimation Models (LEMs) (204);

obtaining, via the one or more hardware processors, a position estimate computed by each of the plurality of LEMs based on the CSI from the plurality of access points (206);

identifying, via the one or more hardware processors, a candidate sub-region of the one or more user devices by each of the plurality of LEMs based on the position estimate to obtain a plurality of candidate sub-regions (208);

identifying, via the one or more hardware processors, at least one LEM amongst the plurality of LEMs based on the candidate sub-region and an accuracy map (210); and

determining, via the one or more hardware processors, an actual location of the one or more user devices based on the identified at least one LEM (212).

2. The processor implemented method as claimed in claim 1, wherein the accuracy map is obtained by:

receiving an input data comprising a plurality of CSI measurements from a plurality of positions associated with the region, wherein the plurality of CSI measurements from the plurality of positions are received with respect to a plurality of actual position coordinates; and

training the plurality of LEMs using the input data and the plurality of actual position coordinates, wherein during the training the plurality of LEMs, the region is partitioned into a plurality of sub-regions, wherein each sub-region from the plurality of sub-regions has one or more specific signal properties, and wherein the accuracy map is created, the accuracy map further comprising a mapping of each sub-region from the plurality of sub-regions to a specific accurate LEM.

3. The processor implemented method as claimed in claim 1, wherein the step of identifying at least one LEM amongst the plurality of LEMs is further based on number of LEMs identifying the candidate sub-region or a probable sub-region that is in proximity of the candidate sub-region.

4. The processor implemented method as claimed in claim 3, further comprising communicating, a probable change in one or more sub-regions, to a network administrator for collecting a set of CSI measurements based on the number of LEMs identifying the candidate sub-region or the probable sub-region that is in proximity of the candidate sub-region.

5. The processor implemented method as claimed in claim 2, wherein the one or more specific signal properties are associated with each sub-region based on one or more obstacles present therein.

6. A system (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive Channel State Information (CSI) from a plurality of access points inside a region, wherein the CSI pertains to one or more mobile devices;

transmit the CSI to a plurality of Location Estimation Models (LEMs);

obtain a position estimate computed by each of the plurality of LEMs based on the CSI from the plurality of access points;

identify a candidate sub-region of the one or more user devices by each of the plurality of LEMs based on the position estimate to obtain a plurality of candidate sub-regions;

identify at least one LEM amongst the plurality of LEMs based on the candidate sub-region and an accuracy map; and

determine an actual location of the one or more user devices based on the identified at least one LEM.

7. The system as claimed in claim 6, wherein the accuracy map is obtained by:

receiving an input data comprising a plurality of CSI measurements from a plurality of positions associated with the region, wherein the plurality of CSI measurements from the plurality of positions are received with respect to a plurality of actual position coordinates; and

training the plurality of LEMs using the input data and the plurality of actual position coordinates, wherein during the training the plurality of LEMs, the region is partitioned into a plurality of sub-regions, wherein each sub-region from the plurality of sub-regions has one or more specific signal properties, and wherein the accuracy map is created, the accuracy map further comprising a mapping of each sub-region from the plurality of sub-regions to a specific accurate LEM.

8. The system as claimed in claim 6, wherein the step of identifying at least one LEM amongst the plurality of LEMs is further based on number of LEMs identifying the candidate sub-region or a probable sub-region that is in proximity of the candidate sub-region.

9. The system as claimed in claim 8, wherein the one or more hardware processors are further configured by the instructions to communicate, a probable change in one or more sub-regions, to a network administrator for collecting a set of CSI measurements based on the number of LEMs identifying the candidate sub-region or the probable sub-region that is in proximity of the candidate sub-region.

10. The system as claimed in claim 7, wherein the one or more specific signal properties are associated with each sub-region based on one or more obstacles present therein.

11. One or more non-transitory machine-readable information storage mediums comprising one or more instructions which when executed by one or more hardware processors cause:

receiving Channel State Information (CSI) from a plurality of access points inside a region, wherein the CSI pertains to one or more mobile devices;
transmitting the CSI to a plurality of Location Estimation Models (LEMs);
obtaining a position estimate computed by each of the plurality of LEMs based on the CSI from the plurality of access points;
identifying a candidate sub-region of the one or more user devices by each of the plurality of LEMs based on the position estimate to obtain a plurality of candidate sub-regions;
identifying at least one LEM amongst the plurality of LEMs based on the candidate sub-region and an accuracy map; and
determining an actual location of the one or more user devices based on the identified at least one LEM .

12. The one or more non-transitory machine-readable information storage mediums as claimed in claim 11, wherein the accuracy map is obtained by:

receiving an input data comprising a plurality of CSI measurements from a plurality of positions associated with the region, wherein the plurality of CSI measurements from the plurality of positions are received with respect to a plurality of actual position coordinates; and
training the plurality of LEMs using the input data and the plurality of actual position coordinates, wherein during the training the plurality of LEMs, the region is partitioned into a plurality of sub-regions, wherein each sub-region from the plurality of sub-regions has one or more specific signal properties, and wherein the accuracy map is created, the accuracy map further comprising a mapping of each sub-region from the plurality of sub-regions to a specific accurate LEM.

13. The one or more non-transitory machine-readable information storage mediums as claimed in claim 11, wherein the step of identifying at least one LEM amongst the plurality of LEMs is further based on number of LEMs identifying the candidate sub-region or a probable sub-region that is in proximity of the candidate sub-region.

14. The one or more non-transitory machine-readable information storage mediums as claimed in claim 13, wherein the one or more instructions which when executed by the one or more hardware processors further cause communicating, a probable change in one or more sub-regions, to a network administrator for collecting a set of CSI measurements based on the number of LEMs identifying the candidate sub-region or the probable sub-region that is in proximity of the candidate sub-region.

15. The one or more non-transitory machine-readable information storage mediums as claimed in claim 12, wherein the one or more specific signal properties are associated with each sub-region based on one or more obstacles present therein.

SYSTEM
100

MEMORY
102

DATABASE
108

HARDWARE
PROCESSOR(S)
104

INTERFACE(S)
106

**FIG. 1**

**Pre-deployment**

Location & CSI data ground truth → Training LEMs

Site surveyor on Region $\mathbb{R}$

Finds sub-regions inside $\mathbb{R}$ using region discretization

Finds the best LEM for each sub-region $= \alpha$

Network admin determines $\mathbb{R}$ has changed

Training finished. Network admin deploys system

**Post-deployment**

Collect CSI data → CSI data sent to each LEM → Each LEM returns location

Using $\alpha$, the associated LEM of $r_w$ returns the actual location ← Majority sub-region $r_w$ identified based on voting and collected location ← From location, sub-region determined

**FIG. 2**

**FIG. 3**

receiving, via one or more hardware processors, Channel State Information (CSI) from a plurality of access points inside a region, wherein the CSI pertains to one or more mobile devices ⟋ 202

transmitting, via the one or more hardware processors, the CSI to a plurality of Location Estimation Models (LEMs) ⟋ 204

obtaining, via the one or more hardware processors, a position estimate computed by each of the plurality of Location Estimation Models (LEMs) based on the CSI from the plurality of access points ⟋ 206

identifying, via the one or more hardware processors, a candidate sub-region of the one or more user devices by each of the plurality of Location Estimation Models (LEMs) based on the position estimate to obtain a plurality of candidate sub-regions ⟋ 208

identifying, via the one or more hardware processors, at least one LEM amongst the plurality of LEMs based on the candidate sub-region and an accuracy map ⟋ 210

determining, via the one or more hardware processors, an actual location of the one or more user devices based on the identified at least one LEM ⟋ 212

**FIG. 4**

FIG. 5

**FIG. 6A**

**FIG. 6B**

**FIG. 6C**

FIG. 7A

MAE for medium sub-regions

FIG. 7B

FIG. 7C

MAE for large sub-regions

**FIG. 7D**

FIG. 8

Europäisches
Patentamt

European
Patent Office

Office européen
des brevets

# EUROPEAN SEARCH REPORT

**Application Number**

EP 24 19 4601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/274460 A1 (CHEN CHUNG-YUAN [TW] ET AL) 2 September 2021 (2021-09-02) <br> * paragraphs [0003], [0007] - [0015], [0026] - [0028], [0035], [0036], [0041] - [0050], [0056] - [0070], [0074], [0076], [0080] * <br> * figures 3, 8-11 * | 1-15 | INV. <br> G01S5/02 <br> H04W4/33 <br><br> ADD. <br> G06N20/00 |
| A | WO 2022/135697 A1 (HUAWEI TECH CO LTD [CN]; CHU YUN YAW [DE]) 30 June 2022 (2022-06-30) <br> * page 3, line 28 - page 4, line 4 * <br> * page 4, line 32 - page 5, line 32 * <br> * page 7, lines 4-11 * <br> * page 15, lines 21-29 * <br> * page 16, line 15 - page 17, line 8 * <br> * page 19, line 33 - page 20, line 24 * <br> * figures 8-11 * | 1-15 | |
| A | WO 2022/251259 A1 (QUALCOMM INC [US]) 1 December 2022 (2022-12-01) <br> * paragraphs [0001], [0005], [0033], [0086], [0094] - [0098], [0152] * <br> * figures 4, 5A-5C * | 1-15 | **TECHNICAL FIELDS SEARCHED (IPC)** <br><br> G01S <br> G06N <br> H04W |
| A | US 2023/152419 A1 (KADAMBI SHREYA [US] ET AL) 18 May 2023 (2023-05-18) <br> * paragraphs [0005], [0006], [0019], [0021], [0047] - [0051] * <br> * figures 4, 5 * | 1-15 | |

The present search report has been drawn up for all claims

| Place of search | Date of completion of the search | Examiner |
|---|---|---|
| The Hague | 24 January 2025 | Roxer, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4601

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | Publication date | Patent family member(s) | Publication date |
|---|---|---|---|
| US 2021274460 A1 | 02-09-2021 | US 2021274310 A1<br>US 2021274460 A1<br>US 2021274496 A1 | 02-09-2021<br>02-09-2021<br>02-09-2021 |
| WO 2022135697 A1 | 30-06-2022 | CN 116601512 A<br>EP 4205318 A1<br>WO 2022135697 A1 | 15-08-2023<br>05-07-2023<br>30-06-2022 |
| WO 2022251259 A1 | 01-12-2022 | US 2022337972 A1<br>WO 2022251259 A1 | 20-10-2022<br>01-12-2022 |
| US 2023152419 A1 | 18-05-2023 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   IN 202321061954

**Non-patent literature cited in the description**

•   **T. R. HENDERSON** ; **M. LACAGE** ; **G. F. RILEY** ; **C. DOWELL** ; **J. KOPENA**. Network simulations with the ns-3 simulator. *SIGCOMM demonstration*, 2008, vol. 14 (14), 527

•   Realistic indoor path loss modeling for regular wifi operations in India. **H. K. RATH** ; **S. TIMMADASARI** ; **B. PANIGRAHI** ; **A. SIMHA**. 2017 Twenty-third National Conference on Communications (NCC).. IEEE, 2017, 1-6

•   Attenuation over distance for indoor propagation topologies at 2.4 ghz. **T. CHRYSIKOS** ; **G. GEORGOPOULOS** ; **S. KOTSOPOULOS**. 2011 IEEE Symposium on Computers and Communications (ISCC).. IEEE, 2011, 329-334